# EUROPEAN PATENT SPECIFICATION

(11) **EP 3 705 372 B1**
(45) Date of publication and mention of the grant of the patent: **16.11.2022**
(21) Application number: 20161080.5
(22) Date of filing: 05.03.2020
(51) Int. Cl.: B62B 7/12, B62B 9/12, B62B 9/20, A47D 13/04

(54) **WHEELED VEHICLE FOR CHILDREN**
FAHRZEUG MIT RÄDERN FÜR KINDER
VÉHICULE À ROUES POUR ENFANTS

(30) Priority: 06.03.2019 CN 201920282850 U
(43) Date of publication of application: 09.09.2020
(73) Proprietor: ID Development Limited, Hong Kong (HK)
(72) Inventor: MAZOYER, Joseph, 69110 SAINTE FOY LES LYON (FR)
(74) Representative: LLR

(56) References cited:
- ES-A1- 2 289 848
- GB-A- 2 535 428
- US-A1- 2013 087 993
- US-A1- 2016 304 152

## Description

### Technical Field

The invention relates to a vehicle for children to use, in particular, to a wheeled vehicle for children.

### Background

Wheeled vehicles for children are mainly for children to use. Wheeled vehicles for children in the prior art have only one mode of utilization and a single function, and are inconvenient to use.

The document US2016/0304152 discloses a set of elements giving the possibility of forming two types of wheeled devices for children; the document US2013/0087993 discloses a convertible stroller enabling a seating area to be raised or lowered; the document GB2535428 discloses a child transportation apparatus reconfigurable between two modes of operation.

### Summary of the Invention

The technical problem that the invention aims to resolve is to provide a wheeled vehicle for children capable of providing multiple modes of utilization.

This problem is solved as defined in claim 1. Preferred embodiments are defined in the dependent claims.

There is provided a wheeled vehicle for children, comprising
a platform assembly, a seating assembly, a handlebar assembly and a multipurpose assembly; wherein
the platform assembly comprises a platform and wheels provided at the bottom of the platform;
the seating assembly comprises a supporting stem and a seat connected to the supporting stem; the supporting stem has a bottom end and a top end that are opposite each other, the bottom end being connected to the platform and provided with a first insertion slot, the top end being provided with a second insertion slot;
the handlebar assembly is provided at its bottom end with a connecting column capable of being detachably insertion-connected into the second insertion slot;
the multipurpose assembly is generally T-shaped and comprises two supporting bodies and a connecting rod, the two supporting bodies being symmetrically fixed at two sides of the connecting rod; the connecting rod is capable of being detachably insertion-connected into the first insertion slot and the second insertion slot; when the connecting rod is insertion-connected into the first insertion slot, the two supporting bodies are located below the seat and can serve as a footrest means; when the connecting rod is insertion-connected into the second insertion slot, the two supporting bodies are located above the seat and can serve as a handrest means.

In the wheeled vehicle, the second insertion slot and the supporting stem are provided coaxially.

In the wheeled vehicle, a wall of the second insertion wall is provided with a positioning slot, the connecting column is provided with a first positioning boss, and the connecting rod is provided with a second positioning boss;
when the connecting column is insertion-connected into the second insertion slot, the first positioning boss is located in the positioning slot;
when the connecting rod is insertion-connected into the second insertion slot, the second positioning boss is located in the positioning slot.

In the wheeled vehicle, the positioning slots are at a number of two and provided respectively at two opposite sides of the second insertion slot; correspondingly, the first positioning bosses are at a number of two and provided respectively at two opposite sides of the connecting column, and the second positioning bosses are at a number of two and provided respectively at two opposite sides of the connecting rod.

In the wheeled vehicle, the second insertion slot is provided with a through hole, the connecting rod is provided with a first fixing hole along its own radial direction, and the connecting column is provided with a second fixing hole along its own radial direction; the vehicle assembly for children further comprises a fixing pin; when the connecting rod is insertion-connected into the second insertion slot, the fixing pin is provided to traverse the through hole and the first fixing hole; when the connecting column is insertion-connected into the second insertion slot, the fixing pin is provided to traverse the through hole and the second fixing hole.

In the wheeled vehicle, the supporting stem is provided at its bottom with an insertion column, the platform is provided with a supporting slot into which the insertion column and the connecting column can be detachably insertion-connected; when the connecting column is insertion-connected into the supporting slot, the handlebar assembly and the platform assembly are assembled to form a kick scooter.

In the wheeled vehicle, the platform is provided its front end with a protrusion having a supporting face that is inclined and offset towards a rear end of the platform; the supporting slot is provided in the supporting face; an angle between an axial direction of the supporting slot and a plan in which the platform is located is an acute angle; an axial direction of the supporting stem is parallel with that of the insertion column, and the supporting stem is provided above the platform in an inclined manner.

In the wheeled vehicle, the supporting stem is formed at its bottom end with a fitting part on which the insertion column is provided, the fitting part fitting tightly the supporting face when the insertion column is insertion-connected into the supporting slot.

In the wheeled vehicle, the seat is connected to the supporting stem in such a manner that it is slidable along an axial direction of the supporting stem, and a locking element is provided between the seat and the supporting stem for locking the relative position of the two.

In the wheeled vehicle, the seat is provided with two parallel guiding bars located respectively at two sides of the supporting stem; the guiding bars are provided with a first through hole, the supporting stem is provided with multiple second through holes arranged along its axial direction, and the locking element is detachably provided to traverse the first through hole and the second through hole.

By implementing embodiments of the invention, in a mode of utilization, the handlebar assembly is insertion-connected at the top end of the supporting stem and can be used by parents to push the vehicle to move, and the multipurpose assembly is insertion-connected at the bottom end of the supporting stem, and, when a child is seated on the seat, can be used as a footrest for the child to support the legs of the child. In another mode of utilization, the handlebar assembly is detached, and the multipurpose assembly can be insertion-connected at the top of the supporting stem and used by parents as a handrest to push the vehicle to move, or be leaned on by a child to practice walking, so that the wheeled vehicle for children has multiple modes of utilization and is convenient to use.

### Description of the Drawings

To more clearly describe the technical solutions of embodiments of the invention or of the prior art, the accompanying drawings that need to be used in embodiments of the invention or the prior art are described below:
Figure 1 is a schematic structural view of a wheeled vehicle for children provided by a preferred embodiment of the invention in a mode of utilization;
Figure 2 is a schematic exploded structural view of the wheeled vehicle for children of Figure 1;
Figure 3 is a schematic structural view of the wheeled vehicle for children of Figure 1 in another mode of utilization;
Figure 4 is a schematic structural view of the wheeled vehicle for children of Figure 1 in yet another mode of utilization.

### Detailed Description of Embodiments

Embodiments of the invention are described in reference to the accompanying drawings in the embodiments of the invention.

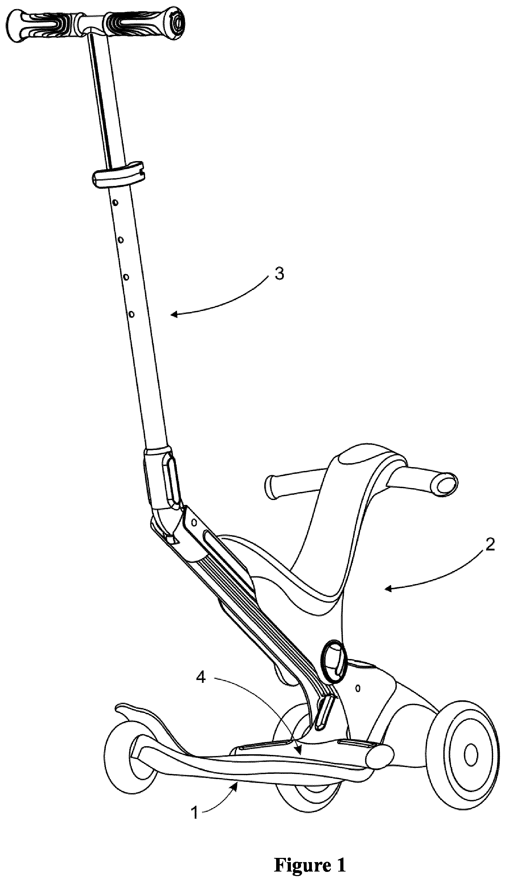

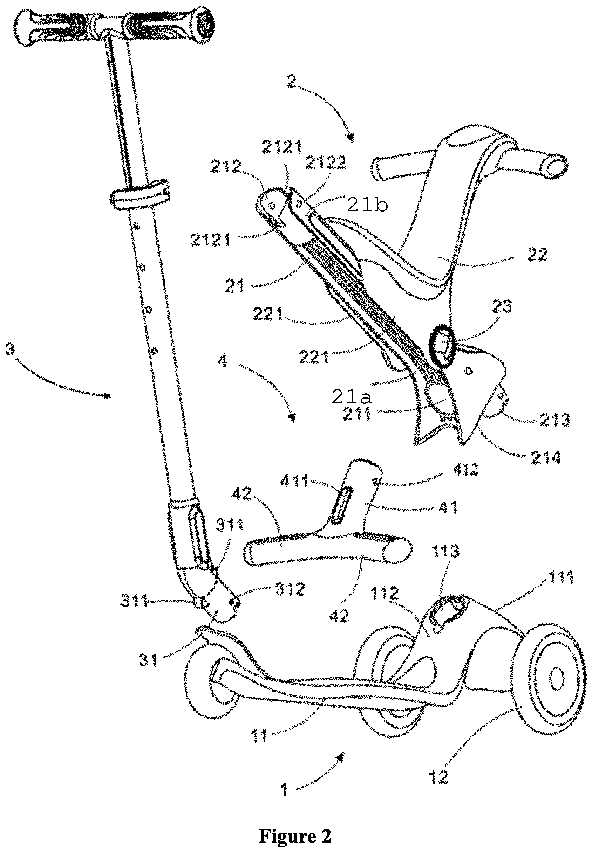

As shown in Figure 1 and Figure 2, a preferred embodiment of the invention discloses a wheeled vehicle for children, comprising a platform assembly 1, a seating assembly 2, a handlebar assembly 3, and a multipurpose assembly 4. The platform assembly 1 is used for providing support to the entire vehicle. The seating assembly 2 is provided on the platform assembly and used for children to sit on. The handlebar assembly 3 is connected to the seating assembly 2 and used for parents to push. The multipurpose assembly 4 can be connected to the bottom of the seating assembly 2 as a foodrest for children, or can replace the position of the handlebar assembly 3 as a handrest, realizing multiple modes of utilization of the wheeled vehicle for children.

The platform assembly 1 comprises a platform 11 and wheels 12 provided at the bottom of the platform 11. There are three wheels 12, of which two are located at the front end of the platform 11 and one is located at the rear end of the platform 11. Of course, in other mode of realization, there can be two, four, etc. of wheels 12.

The seating assembly 2 comprises a supporting stem 21 and a seat 22 connected to the supporting stem 21. The supporting stem 21 has a bottom end 21a and a top end 21b that are opposite each other, the bottom end 21a being connected to the platform 11 and provided with a first insertion slot 211, the top end 21b being provided with a second insertion slot 212. The bottom end 21a of the handlebar assembly 3 is provided with a connecting column 31 capable of being detachably insertion-connected into the second insertion slot 212.

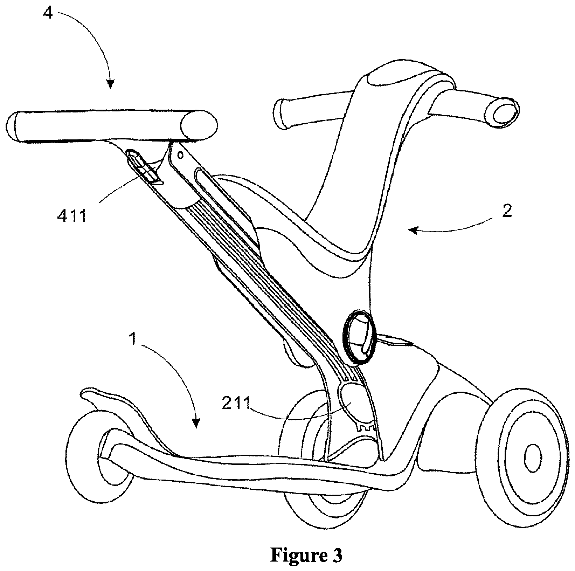

The multipurpose assembly 4 is generally T-shaped, and comprises two supporting bodies 42 and a connecting rod 41, the two supporting bodies 42 being symmetrically provided at two sides of the connecting rod 41.The connecting rod 41 is capable of being detachably insertion-connected into the first insertion slot 211 and the second insertion slot 212. As shown in Figure 1, when the connecting rod 41 is insertion-connected into the first insertion slot 211, the two supporting bodies 42 are located below the seat 22, and can serve as a footrest means for being used as a footrest for children, at which time the connecting column 31 can be insertion-connected into the second insertion slot 212. As shown in Figure 3, when the connecting rod 41 is insertion-connected into the second insertion slot 212, the two supporting bodies 42 are located above the seat 22 and can serve as a handrest means.

With the wheeled vehicle for children provided by the invention, in a mode of utilization, the handlebar assembly 3 is insertion-connected at the top end 21b of the supporting stem 21 and can be used by parents to push the vehicle to move, and the multipurpose assembly 4 is insertion-connected at the bottom end 21a of the supporting stem 21, and, when a child is seated on the seat 22, can be used as a footrest for the child to support the legs of the child; in another mode of utilization, the handlebar assembly 3 is detached, and the multipurpose assembly 4 can be insertion-connected at the top of the supporting stem 21 and used by parents as a handrest to push the vehicle to move, or be leaned on by a child to practice walking, so that the wheeled vehicle for children has multiple modes of utilization and is convenient to use.

Preferably, the second insertion slot 212 and the supporting stem 21 are provided to be coaxial so as to facilitate the processing and manufacturing. Here, the second insertion slot 212 can be provided in a top end face of the supporting stem 21. In other modes of realization, the second insertion slot 212 can be provided in a side wall of the supporting stem 21.

Further, a wall of the second insertion slot 212 is provided with a positioning slot 2121, the connecting column 31 is provided with a first positioning boss 311, and the connecting rod 41 is provided with a second positioning boss 411.

When the connecting column 31 is insertion-connected into the second insertion slot 212, the first positioning boss 311 is located in the positioning slot 2121. By means of the cooperation between the first positioning boss 311 and the positioning slot 2121, a fool-proofing structure is formed, facilitating the insertion of the connecting column 31 into the first insertion slot 211 while preventing the rotation of the handlebar assembly 3 relative to the second insertion slot 212, so as to facilitate a user's grabbing the handlebar assembly 3 by hand to push the wheeled vehicle for children.

When the connecting rod 41 is insertion-connected into the second insertion slot 212, the second positioning boss 411 is located in the positioning slot 2121. By means of the cooperation between the second positioning boss 411 and the positioning slot 2121, a fool-proofing structure is formed, facilitating the insertion of the connecting rod 41 into the first insertion slot 211 while preventing the rotation of the multipurpose assembly 4 relative to the second insertion slot 212.

Further, in the present embodiment, there are two positioning slots 2121 provided respectively at two opposite sides of the second insertion slot 212; Accordingly, there are two first positioning bosses 311 provided respectively at two opposite sides of the connecting column 31 and there are two second positioning bosses 411 provided respectively at two opposite sides of the connecting rod 41. The two first positioning bosses 311 can have the same shape or different shapes and the two second positioning bosses 411 can have the same shape or different shapes.

The second insertion slot 212 is provided with a through hole 2122, the connecting rod 41 is provided with a first fixing hole 412 along its own radial direction, and the connecting column 31 is provided with a second fixing hole 312 along its own radial direction. The vehicle assembly for children further comprises a fixing pin (not shown in the figures). When the connecting rod 41 is insertion-connected into the second insertion slot 212, the fixing pin is provided to traverse the through hole 2122 and the first fixing hole 412 so as to increase the strength of the connection between the supporting stem 21 and the handlebar assembly 3. When the connecting column 31 is insertion-connected into the second insertion slot 212, the fixing pin is provided to traverse the through hole 2122 and the second fixing hole 312 so as to increase the strength of the connection between the supporting stem 21 and the multipurpose assembly 4.

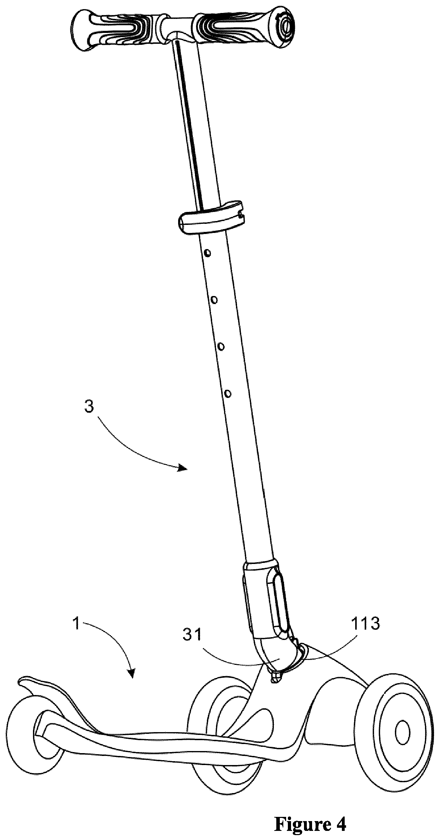

The bottom end 21a of the supporting stem 21 is provided with an insertion column 213, the platform 11 is provided with a supporting slot 113 into which the insertion column 213 and the connecting column 31 can be detachably insertion-connected. As shown in Figure 4, when the connecting column 31 is insertion-connected into the supporting slot 113, the handlebar assembly 3 and the platform assembly 1 can be assembled to form a kick scooter, so as to achieve the multipurpose utilization of the wheeled vehicle for children.

As shown in Figure 2, the front end of the platform 11 is provided with a protrusion 111 having a supporting face 112 that is inclined and offset towards the rear end of the platform 11. The supporting slot 113 is provided in the supporting face 112. The angle between the axial direction of the supporting slot 113 and the plan in which the platform 11 is located is an acute angle. The axial direction of the supporting stem 21 is parallel with that of the insertion column 213 so that the supporting stem 21 is provided above the platform 11 in an inclined manner, with its bottom end 21a located above the front end of the platform 11, and its top end 21b located above the rear end of the platform 11, thus the seat 22 is substantially located right above the platform assembly 1 so as to ensure the front-rear balance of the whole vehicle.

The bottom end 21a of the supporting stem 21 is formed with a fitting part 214 on which the insertion column 213 is provided. The fitting part 214 tightly fits the supporting face 112 when the insertion column 213 is insertion-connected into the supporting slot 113, which can further increase the strength of the connection between the supporting stem 21 and the platform 11.

The seat 22 is connected to the supporting stem 21 in such a manner that it is sliadable along the axial direction of the supporting stem 21, and a locking element 23 is provided between the seat 22 and the supporting stem 21 for locking the relative position of the two. By means of the relative sliding of the seat 22 and the supporting stem 21, the height of the seat 22 can be adjusted, and the locking element 23 can lock the seat 22 at a proper height, facilitating the seating of children.

In the present embodiment, the seat 22 is provided with two parallel guiding bars 221 located respectively at two sides of the supporting stem 21, thus the supporting stem 21 can be held in sandwich between the two guiding bars 221 so as to increase the strength of connection between the seat 22 and the supporting stem 21. The guiding bars 221 are provided with a first through hole (not shown in the figures), the supporting stem 21 is provided with multiple second through holes (not shown in the figures) arranged along its axial direction, and the locking element 23 is detachably provided to traverse the first through hole and the second through hole. When the height of the seat 22 needs to be adjusted, the locking element 23 can be pulled out to make the seat 22 slide to a proper height, the first through hole is made to correspond to one of the second through holes and the locking element 23 is inserted therein so as to fix the position of the seat 22.

In the present embodiment, a sliding slot is formed between the two guiding bars 221 so as to achieve the relative sliding of the seat 22 and the supporting stem 21. Here, in other modes of realization, it is also possible that a sliding slot is formed in the supporting stem 21, and the seat 22 is slidably provided in the sliding slot so as to achieve the relative sliding of the supporting stem 21 and the seat 22.

## Claims

1. A wheeled vehicle for children, which
comprises a platform assembly (1), a seating assembly (2), a handlebar assembly (3) and a multipurpose assembly (4); wherein
the platform assembly (1) comprises a platform (11) and wheels (12) provided at the bottom of the platform (11);
the seating assembly (2) comprises a supporting stem (21) and a seat (22) connected to the supporting stem (21); the supporting stem (21) has a bottom end (21a) and a top end (21b) that are opposite each other, the bottom end (21a) being connected to the platform (11) and provided with a first insertion slot (211), the top end being provided with a second insertion slot (212);
the handlebar assembly (3) is provided at its bottom end with a connecting column (31) capable of being detachably insertion-connected into the second insertion slot (212),
**characterized in that** the multipurpose assembly (4) is generally T-shaped and comprises two supporting bodies (42) and a connecting rod (41) , the two supporting bodies (42) being symmetrically fixed at two sides of the connecting rod (41); the connecting rod is capable of being detachably insertion-connected into the first insertion slot (211) and the second insertion slot (212) ; when the connecting rod (41) is insertion-connected into the first insertion slot (211), the two supporting bodies (42) are located below the seat (22) and can serve as a footrest means; when the connecting rod (41) is insertion-connected into the second insertion slot (212), the two supporting bodies (42) are located above the seat (22) and can serve as a handrest means.

2. The wheeled vehicle for children of claim 1, **characterized in that**, the second insertion slot (212) and the supporting stem (21) are provided coaxially.

3. The wheeled vehicle for children of claim 1, **characterized in that**, a wall of a second insertion wall is provided with a positioning slot (2121), the connecting column (31) is provided with a first positioning boss (311), and the connecting rod (41) is provided with a second positioning boss (411);
when the connecting column (31) is insertion-connected into the second insertion slot (212), the first positioning boss (311) is located in the positioning slot (2121);
when the connecting rod (41) is insertion-connected into the second insertion slot (212), the second positioning boss (411) is located in the positioning slot (2121).

4. The wheeled vehicle for children of claim 3, **characterized in that**, the positioning slots (2121) are at a number of two and provided respectively at two opposite sides of the second insertion slot (212); correspondingly, the first positioning bosses (311) are at a number of two and provided respectively at two opposite sides of the connecting column (31), and the second positioning bosses (411) are at a number of two and provided respectively at two opposite sides of the connecting rod (41).

5. The wheeled vehicle for children of claim 1, **characterized in that**, the second insertion slot (212) is provided with a through hole (2122), the connecting rod (41) is provided with a first fixing hole (412) along its own radial direction, and the connecting column (31) is provided with a second fixing hole (312) along its own radial direction; the vehicle assembly for children further comprises a fixing pin; when the connecting rod (41) is insertion-connected into the second insertion slot (212), the fixing pin is provided to traverse the through hole (2122) and the first fixing hole (412); when the connecting column (31) is insertion-connected into the second insertion slot (212), the fixing pin is provided to traverse the through hole (2122) and the second fixing hole (312).

6. The wheeled vehicle for children of any one of claims 1 to 5, **characterized in that**, the supporting stem (21) is provided at its bottom with an insertion column (213), the platform (11) is provided with a supporting slot (113) into which the insertion column (213) and the connecting column (31) can be detachably insertion-connected; when the connecting column (31) is insertion-connected into the supporting slot (113), the handlebar assembly (3) and the platform assembly (1) are assembled to form a kick scooter.

7. The wheeled vehicle for children of claim 6, **characterized in that**, the platform (11) is provided its front end with a protrusion (111) having a supporting face (112) that is inclined and offset towards a rear end of the platform (11); the supporting slot (113) is provided in the supporting face (112); an angle between an axial direction of the supporting slot (113) and a plan in which the platform (11) is located is an acute angle; an axial direction of the supporting stem (21) is parallel with that of the insertion column (213), and the supporting stem (21) is provided above the platform (11) in an inclined manner.

8. The wheeled vehicle for children of claim 7, **characterized in that**, the supporting stem (21) is formed at its bottom end (21a) with a fitting part (214) on which the insertion column (213) is provided, the fitting part (214) fitting tightly the supporting face (112) when the insertion column (213) is insertion-connected into the supporting slot (113).

9. The wheeled vehicle for children of claim 1, **characterized in that**, the seat (22) is connected to the supporting stem (21) in such a manner that it is slidable along an axial direction of the supporting stem (21), and a locking element (23) is provided between the seat (22) and the supporting stem (21) for locking the relative position of the two.

10. The wheeled vehicle for children of claim 9, **characterized in that**, the seat (22) is provided with two parallel guiding bars (221) located respectively at two sides of the supporting stem (21); the guiding bars (221) are provided with a first through hole, the supporting stem is provided with multiple second through holes arranged along its axial direction, and the locking element is detachably provided to traverse the first through hole and the second through hole.

## Patentansprüche

1. Ein Fahrzeug mit Rädern für Kinder, das eine Plattformanordnung (1), eine Sitzanordnung (2), eine Lenkeranordnung (3) und eine Mehrzweckanordnung (4) umfasst; wobei
die Plattformanordnung (1) eine Plattform (11) und Räder (12) umfasst, die an der Unterseite der Plattform (11) angeordnet sind;
die Sitzanordnung (2) eine Stützstange (21) und einen Sitz (22) umfasst, der mit der Stützstange (21) verbunden ist; die Stützstange (21) ein unteres Ende (21a) und ein oberes Ende (21b) umfasst, die einander gegenüberliegen, wobei das untere Ende (21a) mit der Plattform (11) verbunden ist und einen ersten Einführschlitz (211) aufweist, wobei das obere Ende einen zweiten Einführschlitz (212) aufweist;
die Lenkeranordnung (3) an ihrem unteren Ende eine Verbindungssäule (31) aufweist, die lösbar in den zweiten Einführschlitz (212) einsteckbar ist,
**dadurch gekennzeichnet, dass**
die Mehrzweckanordnung (4) allgemein T-förmig ist und zwei Stützkörper (42) und eine Verbindungsstange (41) umfasst, wobei die beiden Stützkörper (42) symmetrisch an zwei Seiten der Verbindungsstange (41) befestigt sind; die Verbindungsstange lösbar in den ersten Einführschlitz (211) und den zweiten Einführschlitz (212) eingesteckt werden kann; wenn die Verbindungsstange (41) in den ersten Einführschlitz (211) eingesteckt ist, sich die beiden Stützkörper (42) unterhalb des Sitzes (22) befinden und als Fußstützenmittel dienen können; wenn die Verbindungsstange (41) in den zweiten Einführschlitz (212) eingesteckt ist, sich die beiden Stützkörper (42) oberhalb des Sitzes (22) befinden und als Handstützmittel dienen können.

2. Fahrzeug mit Rädern für Kinder nach Anspruch 1, **dadurch gekennzeichnet, dass** der zweite Einführschlitz (212) und die Stützstange (21) koaxial angeordnet sind.

3. Fahrzeug mit Rädern nach Anspruch 1, **dadurch gekennzeichnet, dass** eine Wand einer zweiten Einführwand einen Positionierschlitz (2121) aufweist, die Verbindungssäule (31) einen ersten Positioniervorsprung (311aufweist, und die Verbindungsstange (41einen zweiten Positioniervorsprung (411) aufweist; wenn die Verbindungssäule (31) in den zweiten Einführschlitz (212) eingeführt wird, ist der erste Positioniervorsprung (311) in dem Positionierschlitz (2121) angeordnet; wenn die Verbindungsstange (41) in den zweiten Einführschlitz (212) eingeführt wird, ist der zweite Positioniervorsprung (411) in dem Positionierschlitz (2121) angeordnet.

4. Fahrzeug mit Rädern nach Anspruch 3, **dadurch gekennzeichnet, dass** die Positionierschlitze (2121) eine Anzahl von zwei sind und jeweils an zwei gegenüberliegenden Seiten des zweiten Einführschlitzes (212) angeordnet sind; entsprechend sind die ersten Positioniervorsprünge (311) eine Anzahl von zwei und jeweils an zwei gegenüberliegenden Seiten der Verbindungssäule (31) angeordnet, und die zweiten Positioniervorsprünge (411) sind eine Anzahl von zwei und jeweils an zwei gegenüberliegenden Seiten der Verbindungsstange (41) angeordnet.

5. Fahrzeug mit Rädern nach Anspruch 1, **dadurch gekennzeichnet, dass** der zweite Einführschlitz (212) ein Durchgangsloch (2122) aufweist, die Verbindungsstange (41) ein erstes Verbindungsloch (412) entlang ihrer eigenen radialen Richtung aufweist und die Verbindungssäule (31) ein zweites Verbindungsloch (312) entlang ihrer eigenen radialen Richtung aufweist; die Fahrzeugbaugruppe für Kinder umfasst ferner einen Verbindungsstift; wenn die Verbindungsstange (41) in den zweiten Einführschlitz (212) eingesteckt ist, der Verbindungsstift dazu ausgebildet ist, das Durchgangsloch (2122) und das erste Verbindungsloch (412) zu durchqueren; wenn die Verbindungssäule (31) in den zweiten Einführschlitz (212) eingesteckt ist, der Verbindungsstift dazu ausgebildet ist, das Durchgangsloch (2122) und das zweite Verbindungsloch (312) zu durchqueren.

6. Fahrzeug mit Rädern für Kinder nach einem der Ansprüche 1 bis 5, **dadurch gekennzeichnet, dass** die Stützstange (21) an ihrem unteren Ende eine Einführsäule (213) aufweist, dass die Plattform (11) einen Einführschlitz (113) aufweist, in den die Einführsäule (213) und die Verbindungssäule (31) lösbar eingeführt werden können, und dass die Lenkeranordnung (3) und die Plattformanordnung (1) zu einem Tretroller zusammengefügt sind, wenn die Verbindungssäule (31) in den Einführschlitz (113) eingeführt ist.

7. Fahrzeug mit Rädern nach Anspruch 6, **dadurch gekennzeichnet, dass** die Plattform (11) an ihrem vorderen Ende einen Vorsprung (111) umfasst, der eine Abstützfläche (112) aufweist, die zu einem hinteren Ende der Plattform (11) hin geneigt und versetzt ist; der Abstützschlitz (113) in der Abstützfläche (112) angeordnet ist; der Stützschlitz (113) in der Stützfläche (112) angeordnet ist; ein Winkel zwischen einer axialen Richtung des Stützschlitzes (113) und einer Ebene, in der sich die Plattform (11) befindet, ein spitzer Winkel ist; eine axiale Richtung der Stützstange (21) parallel zu derjenigen der Einführsäule (213) ist, und die Stützstange (21) oberhalb der Plattform (11) in einer geneigten Weise angeordnet ist.

8. Fahrzeug mit Rädern nach Anspruch 7, **dadurch gekennzeichnet, dass** die Stützstange (21) an ihrem unteren Ende (21a) mit einem Befestigungsteil (214) ausgebildet ist, an dem die Einführsäule (213) angeordnet ist; wobei das Befestigungsteil (214) die Abstützfläche (112) fest verbindet, wenn die Einführsäule (213) in den Abstützschlitz (113) eingeführt wird.

9. Das Fahrzeug mit Rädern für Kinder nach Anspruch 1, **dadurch gekennzeichnet, dass** der Sitz (22) mit der Stützstange (21) derart verbunden ist, dass dieser entlang einer axialen Richtung der Stützstange (21) verschiebbar ist; und ein Verriegelungselement (23) zwischen dem Sitz (22) und der Stützstange (21) zum Verriegeln der relativen Position der beiden angeordnet ist.

10. Fahrzeug mit Rädern nach Anspruch 9, **dadurch gekennzeichnet, dass** der Sitz (22) zwei parallele Führungsstangen (221) aufweist, die jeweils an zwei Seiten der Stützstange (21) angeordnet sind; die Führungsstangen (221) ein erstes Durchgangsloch aufweisen, die Stützstange mehrere zweiten Durchgangslöcher aufweisen, die entlang ihrer axialen Richtung angeordnet sind; und das Verriegelungselement lösbar angeordnet ist, um das erste Durchgangsloch und das zweite Durchgangsloch zu durchqueren.

## Revendications

1. Véhicule à roues pour enfants, qui comprend un ensemble de plate-forme (1), un ensemble de siège (2), un ensemble de guidon (3) et un ensemble polyvalent (4) ; dans lequel
l'ensemble de plate-forme (1) comprend une plate-forme (11) et des roues (12) prévues au bas de la plate-forme (11) ;
l'ensemble de siège (2) comprend une tige de support (21) et un siège (22) relié à la tige de support (21) ; la tige de support (21) a une extrémité inférieure (21a) et une extrémité supérieure (21b) qui sont opposées l'une à l'autre, l'extrémité inférieure (21a) étant reliée à la plate-forme (11) et pourvue d'une première fente d'insertion (211), l'extrémité supérieure étant pourvue d'une seconde fente d'insertion (212) ;
l'ensemble de guidon (3) est muni à son extrémité inférieure d'une colonne de connexion (31) capable d'être connectée par insertion de manière détachable dans la seconde fente d'insertion (212),
**caractérisé en ce que** l'ensemble polyvalent (4) a une forme générale en T et comprend deux corps de support (42) et une tige de connexion (41), les deux corps de support (42) étant fixés symétriquement sur deux côtés de la tige de connexion (41) ; la tige de connexion est capable d'être connectée par insertion de manière détachable dans la première fente d'insertion (211) et la seconde fente d'insertion (212) ; lorsque la tige de connexion (41) est connectée par insertion dans la première fente d'insertion (211), les deux corps de support (42) sont situés sous le siège (22) et peuvent servir de repose-pieds ; lorsque la tige de connexion (41) est connectée par insertion dans la seconde fente d'insertion (212), les deux corps de support (42) sont situés au-dessus du siège (22) et peuvent servir de repose-mains.

2. Véhicule à roues pour enfants selon la revendication 1, **caractérisé en ce que**, la seconde fente d'insertion (212) et la tige de support (21) sont prévues coaxialement.

3. Véhicule à roues pour enfants selon la revendication 1, **caractérisé en ce que**, une paroi d'une seconde paroi d'insertion est pourvue d'une fente de positionnement (2121), la colonne de connexion (31) est pourvue d'un premier bossage de positionnement (311), et la tige de connexion (41) est munie d'un second bossage de positionnement (411) ;
lorsque la colonne de connexion (31) est connectée par insertion dans la seconde fente d'insertion (212), le premier bossage de positionnement (311) est situé dans la fente de positionnement (2121) ;
lorsque la tige de connexion (41) est connectée par insertion dans la seconde fente d'insertion (212), le second bossage de positionnement (411) est situé dans la fente de positionnement (2121).

4. Véhicule à roues pour enfants selon la revendication 3, **caractérisé en ce que**, les fentes de positionnement (2121) sont au nombre de deux et sont prévues respectivement sur deux côtés opposés de la seconde fente d'insertion (212) ; de manière correspondante, les premiers bossages de positionnement (311) sont au nombre de deux et sont prévus respectivement sur deux côtés opposés de la colonne de connexion (31), et les seconds bossages de positionnement (411) sont au nombre de deux et prévus respectivement sur deux côtés opposés de la tige de connexion (41).

5. Véhicule à roues pour enfants selon la revendication 1, **caractérisé en ce que**, la seconde fente d'insertion (212) est pourvue d'un orifice traversant (2122), la tige de connexion (41) est pourvue d'un premier orifice de fixation (412) le long de sa propre direction radiale, et la colonne de connexion (31) est pourvue d'un second orifice de fixation (312) le long de sa propre direction radiale ; l'ensemble de véhicule pour enfants comprend en outre un pion de fixation ; lorsque la tige de connexion (41) est connectée par insertion dans la seconde fente d'insertion (212), le pion de fixation est prévu pour traverser l'orifice traversant (2122) et le premier orifice de fixation (412) ; lorsque la colonne de connexion (31) est connectée par insertion dans la seconde fente d'insertion (212), le pion de fixation est prévu pour traverser l'orifice traversant (2122) et le second orifice de fixation (312).

6. Véhicule à roues pour enfants selon l'une quelconque des revendications 1 à 5, **caractérisé en ce que**, la tige de support (21) est pourvue à sa base d'une colonne d'insertion (213), la plate-forme (11) est pourvue d'une fente de support (113) dans laquelle la colonne d'insertion (213) et la colonne de connexion (31) peuvent être connectées par insertion de manière détachable ; lorsque la colonne de connexion (31) est connectée par insertion dans la fente de support (113), l'ensemble de guidon (3) et l'ensemble de plate-forme (1) sont assemblés pour former une trottinette.

7. Véhicule à roues pour enfants selon la revendication 6, **caractérisé en ce que**, la plate-forme (11) est pourvue à son extrémité avant d'une saillie (111) ayant une face de support (112) qui est inclinée et décalée vers une extrémité arrière de la plate-forme (11) ; la fente de support (113) est prévue dans la face de support (112) ; un angle entre une direction axiale de la fente de support (113) et un plan dans lequel la plate-forme (11) est située est un angle aigu ; une direction axiale de la tige de support (21) est parallèle à celle de la colonne d'insertion (213), et la tige de support (21) est prévue au-dessus de la plate-forme (11) d'une manière inclinée.

8. Véhicule à roues pour enfants selon la revendication 7, **caractérisé en ce que**, la tige de support (21) est formée à son extrémité inférieure (21a) avec une partie d'ajustement (214) sur laquelle la colonne d'insertion (213) est prévue, la partie d'ajustement (214) s'ajustant étroitement à la face de support (112) lorsque la colonne d'insertion (213) est connectée par insertion dans la fente de support (113).

9. Véhicule à roues pour enfants selon la revendication 1, **caractérisé en ce que**, le siège (22) est connecté à la tige de support (21) de telle manière qu'il peut coulisser le long d'une direction axiale de la tige de support (21), et un élément de verrouillage (23) est prévu entre le siège (22) et la tige de support (21) pour verrouiller la position relative des deux.

10. Véhicule à roues pour enfants selon la revendication 9, **caractérisé en ce que**, le siège (22) est pourvu de deux barres de guidage parallèles (221) situées respectivement sur deux côtés de la tige de support (21) ; les barres de guidage (221) sont pourvues d'un premier orifice traversant, la tige de support est pourvue de multiples seconds orifices traversants disposés le long de sa direction axiale, et l'élément de verrouillage est prévu de manière détachable pour traverser le premier orifice traversant et le second orifice traversant.
